# EUROPEAN PATENT APPLICATION

(11) **EP 1 447 941 A2**
(43) Date of publication of application: **18.08.2004**
(21) Application number: 04250818.4
(22) Date of filing: 16.02.2004
(51) Int. Cl.: H04L 12/28, H04L 12/403

(54) **Home network system and method of providing operation history for same**

(30) Priority: 17.02.2003 KR 2003009801
(71) Applicant: LG ELECTRONICS INC., Seoul (KR)
(72) Inventor: Jeon, Young Jae, Daegu (KR)
(74) Representative: Hale, Peter

(57) **Abstract**

A home network system and a method of providing operation history data for the same are disclosed. The home network system includes at least one slave device and a master device, which includes a microprocessor, a memory, and a display unit. The microprocessor repeatedly sends a status request signal to the slave device and receives one or more response signal from the slave device in response to the request signal. The microprocessor constructs an operation history database in the memory by cumulatively storing operation status data included in each response signal. Finally, the microprocessor extracts data from the database when requested by a user, and the display unit displays the extracted data.

## Description

The present invention relates to a network system, and more particularly, to a home network system and a method of providing operation history for the network system.

In earlier stages of the development of home automation systems that automatically control various kinds of appliances in a home, or at a place away from a home, each appliance was controlled independently through a telephone line or infrared rays. However, such appliances could not be controlled as a group even if they were in some way associated with one another. In more recent years, home network systems have been developed in which a network is constructed among the respective home appliances using a communication means and in which a controller is provided to control and manage the appliances independently or as a group.

In general, a typical home network system includes a master device and a plurality of slave devices. Many home appliances may be used as a master device, but some of the typical master devices are a television (TV) receiver, a personal computer (PC) and an Internet-ready refrigerator, which can be connected to the Internet so that a user is able to remotely control operations and functions of the master device or any slave device. The master appliances have a memory for sharing information with slave devices connected in a network.

In such home network system, when a slave device receives a status request signal from the master device, it always sends a response signal (e.g., a message or event signal) back to the master device. Therefore, when a large number of slave devices are connected to the network and are in operation, the master device may have problems in properly receiving and displaying all the message or event information sent by all the slave devices. Due to this reason, a user may be greatly inconvenienced when trying to use or operate the master device. One of the known functions for eliminating this overload problem is a BLOCK function, which may be activated in the master device for not displaying (blocking) the message signals sent by the slave devices for a predefined period of time. Therefore, it is impossible for a user to view or check the messages which are sent by the slave devices during the time the BLOCK function was activated.

In addition to the problems mentioned above, the master device of the existing home network system does not store any messages or data received from the slave devices. In other words, a user may not be able to check previous operation history data of the slave devices. Therefore, a home network system having a master device, which is able to store the previous operation history data of each slave device connected to the master device and to display the history data to users, are in great demand.

The present invention is directed to a home network system and a method of providing operation history for the home network system that substantially address one or more problems due to limitations and disadvantages of the related art.

An object of the present invention is to provide a home network system having a master device, which is able to store the previous operation history data of each slave device connected to the master device and to conveniently provide the history data to users.

Another object of the present invention is to provide a method of providing previous operation history data of each slave device connected to a master device in a home network system.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

One aspect of the invention is defined in the accompanying independent claims. Some preferred features are recited in the dependent claims.

To achieve these objects and other advantages and in accordance with the purpose of the invention, as embodied and broadly described herein, a home network system may include at least one slave device and a master device operatively connected to the slave device. The master device may include a microprocessor operatively connected to the slave device, a memory coupled to the microprocessor, and a display coupled to the microprocessor within the master device. The microprocessor repeatedly sends a status request signal to the slave device and receives one or more response signals from the slave device. Then, the memory constructs an operation history database by cumulatively storing operation status data included in each response signal. The microprocessor extracts data from the operation history database when a history inquiry request is received from a user, and the display unit displays the extracted operation history data for a user's view.

In another aspect of the present invention, a television (TV) receiver connected to a plurality of slave devices in a home network system may include a microprocessor operatively connected to the slave devices, a memory coupled to the microprocessor, and a display unit which may be coupled to the microprocessor. The microprocessor repeatedly sends status request signals to the slave devices and receives one or more response signals from each slave device. Then the memory constructs an operation history database by cumulatively storing operation status data included in each response signal. Next, the microprocessor extracts data from the operation history database when a history inquiry request is received from a user, and the display unit displays the extracted operation history data for a user's view.

In further aspect of the present invention, a method of providing operation history data in a home network system may include the steps of sending status request signals to a plurality of slave devices, respectively, receiving one or more response signals sent by each slave device, and constructing an operation history database in a memory. The operation history database may be constructed by cumulatively storing operation status data included in each response signal into the memory. The method according to the present invention may further include the step of extracting data from the operation history database when a history inquiry request is received from a user. Finally, the data extracted from the operation history database may be displayed on a display unit for a user's view.

It is to be understood that both the foregoing general description and the following detailed description of the present invention are exemplary and explanatory and are intended to provide further explanation of the invention as claimed.

The accompanying drawings, which are included to provide a further understanding of the invention and are incorporated in and constitute a part of this application, illustrate embodiments) of the invention and together with the description serve to explain the principle of the invention. In the drawings;
FIG. 1 illustrates a home network system according to the present invention; and
FIG. 2 illustrates a method of providing operation history for a home network system according to the present invention.

Reference will now be made in detail to the preferred embodiments of the present invention, examples of which are illustrated in the accompanying drawings. Wherever possible, the same reference numbers will be used throughout the drawings to refer to the same or like parts.

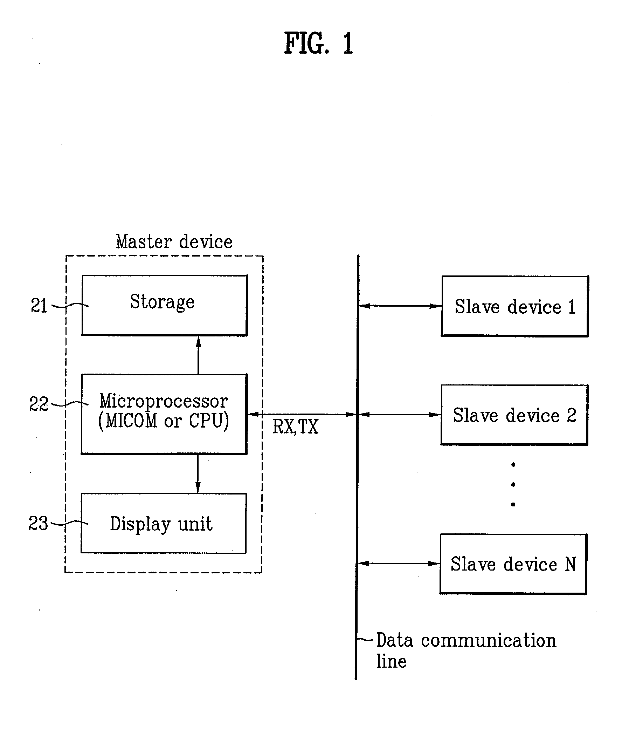

FIG. 1 illustrates a home network system according to the present invention. As shown in FIG. 1, the home network system includes a plurality of slave devices and a master device operatively connected to the slave devices. For example, some of the examples of the slave devices are an electric rice cooker, a refrigerator, a heat oven, a microwave oven, an air conditioner, etc. In addition, the master device of the home network system may be an electrical device having data display and user interface capabilities such as a television (TV) receiver, a refrigerator with a display panel, a personal computer (PC), a personal data assistant (PDA) device, etc.

The master device shown in FIG. 1 includes a microprocessor 22 operatively connected to the slave devices for repeatedly sending a status request signal to each slave device and receiving one or more response signals from each slave device. The microprocessor 22 may be connected to the slave devices through a wire data communication line, an example of which is a power communication line (via Power Line Communication (PLC) modems), or through a wireless communication line (e.g., Bluetooth data communication). The microprocessor 22 (e.g., a microcomputer or a central processing unit (CPU)) is a controller that is able to control each slave device as well as the master device and monitors the operations of the master and slave devices.

The master device further includes data storage (e.g., a memory) coupled to the microprocessor 22 for constructing an operation history database by cumulatively storing operation status data included in each response signal. When a user makes a history inquiry request, the microprocessor 22 extracts data from the operation history database, and it displays the extracted operation history data on the display unit. The displayed operation history data may include a list of operations or events performed by the slave devices during a predetermined period of time.

The master device is able to monitor operations of the slave devices and to provide the previous operation history of one or more slave devices to users when a history inquiry request is made. Therefore, even when a user is distant from home or has activated a message BLOCK function of the master device, which prevents any message sent by each slave device from being displayed on the display unit 23 of the master device when the message is received, the user is still able to access to the previous operation history of the slave devices using the master device of the present invention. The microprocessor 22 of the master device controls and monitors the operation of each slave device by periodically (repeatedly) sending a status request signal and receiving a corresponding response signal from each slave device. Regardless of whether the message BLOCK function of the master device is currently activated or not, the microprocessor 22 cumulatively stores operation status data included in each response signal in the storage 21 and displays the stored data on the display unit 23 when requested by a user.

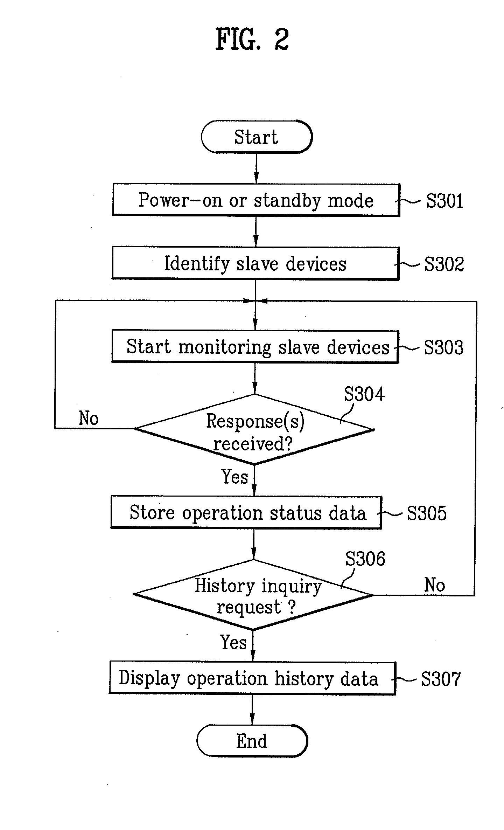

Reference will now be made in detail to the operation of the home network system shown in FIG. 1 and a method of providing operation history for a home network system according to the present invention, an example of which is illustrated in FIG. 2. Initially, the master device connected to the home network system shown in FIG. 1 may be set to Power-on Mode or Standby Mode in step S301. For example, the master device may be automatically set to Standby mode when a user interface unit (not illustrated) of the master device receives no user input for a predefined period of time, or it may be set to Standby mode manually by a user. In Standby mode, the main power of the master device may be off, but the power is continuously supplied to the microprocessor 22 included in the master device. However, this step is only optional and is not critically essential in order to achieve the purpose and objective of the present invention.

Thereafter, the microprocessor 22 identifies (or recognizes) a plurality of slave devices that are connected to the microprocessor 22 in the home network system as shown in FIG. 1 in step S302. If the home network system is a power line communication (PLC) system, the microprocessor 22 may identify the plurality of slave devices by identifying their identifications (IDs).

After all the slave devices are identified in step S302, the microprocessor 22 starts monitoring the slave devices by sending status request signals to the slave devices, respectively, in step S303. Next, the microprocessor 22 determines whether any response signal is received from the slave devices in step S304 in response to the status request signals sent. A response signal sent by a slave device may include data (e.g., a message) indicating the current operation status (or condition) of the slave device. For example, the operation status data included in the response signal may indicate the initiation of one or more operations of the slave device (e.g., wash and dry functions for a washer) and the corresponding initiation time. Alternatively, the operation status data may indicate the completion of operations and the corresponding completion time. In addition, the status data may indicate that an operation is currently in progress, or it may simply indicate that there is no operation in progress.

If it is determined in step S304 that any response signal is received from the slave devices, the microprocessor 22 stores the operation status data included in each response signal in the storage (e.g., a memory) 21 of the master device in step S305, regardless of whether the BLOCK function of the master device is currently activated or not. Otherwise, the microprocessor 22 repeats the steps beginning from S303.

Next, the microprocessor 22 further determines whether a user has made a specific request for accessing to the operation status data stored in the storage 21 in step S306. The data access request may be made by manually pressing a predefined function key button, which may be provided within the master device, or by simply turning the power of the master device on. If there is no request made, the steps beginning from S303 will be repeated again. In other words, the microprocessor 22 continuously sends status request signals to the plurality of slave devices and continuously and cumulatively stores current operation status data in the storage 21 in addition to the previously stored data each time a response signal is received. Therefore, all the status data stored in the storage 21 represent a operation history database of the slave devices, and they have been accumulated during a specified period of time, which may be manually determined by a user or be automatically set by the microprocessor 22.

Referring back to FIG. 2, when a request for accessing the operation history data of one or more slave devices (a history inquiry request) is made in step S306, the microprocessor 22 generates a control signal to the user interface unit 23. Then, a display unit (not illustrated) included in the user interface unit 23 displays the operation history data for the user's viewing.

When a user makes a request for accessing the operation history data stored in the storage 21 in step S306, the user may select one or more options for selecting which portion of the operation history data he or she wishes to access (view). These options may include at least one of an option for selecting a period of time and an option for selecting one or more slave devices. For example, if a user selects 2003/12/01 8:00 AM to 2003/12/10 8:00 PM in step S306, the microprocessor 22 will only display a portion of the operation history data that correspond to all the operations events performed by the slave devices during this period. In another example, if a user selects a given slave device such as a washer, only the operation history data of the washer will be displayed.

Reference will now be made to an example of the method of providing operation history shown in FIG. 2 for a home network system, in which a television (TV) receiver is used as a master device and a washer and an electric rice cooker are used as slave devices in the home network system. Initially, the television receiver may be set to Standby mode, in which the main power of the TV receiver is off, but the power is continuously supplied to the microprocessor 22 included in the TV receiver. Thereafter, the microprocessor 22 identifies the washer and rice cooker, which are connected to the TV receiver directly or indirectly within the network, by identifying their device identifications (IDs).

Then, the microprocessor 22 monitors the washer and rice cooker by sending a status request signal to each device, receiving any response signal sent by the washer or rice cooker, and storing operation status (condition) data included in the response signal in the storage 21. For example, the operation status data sent by the washer may indicate the initiation of a wash cycle and the time of such initiation and/or the completion of the wash cycle and the time of the completion, or it may indicate that the wash cycle is currently in progress. In addition, it may simply indicate that there is no operation of the washer in progress. The microprocessor 22 continuously sends request signals to the washer and rice cooker and continuously stores operation status data in the storage 21 in addition to the previously stored data each time a response signal is received. Therefore, all the data accumulated in the storage 21 represent operation history data of the washer and rice cooker.

When a user makes a request for accessing the operation history of the slave devices by turning the TV receiver's main power on or pressing a corresponding function key provided on the TV receiver, the microprocessor 22 generates a control signal to the display unit of 23 for displaying the operation history data stored in the storage 21 for a user's view. Therefore, the user is able to view a list of operations or events that have been performed for a specified period of time and the corresponding time for each device. In this way, all the events or operations occurred by the slave devices within the home network system can be easily viewed.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A home network system comprising:
at least one slave device; and
a master device operatively connected to the slave device, the master device comprising:
a microprocessor operatively connected to the slave device for repeatedly sending a status request signal to the slave device and receiving one or more response signals from the slave device;
a memory coupled to the microprocessor for constructing an operation history database by cumulatively storing operation status data included in each response signal, wherein the microprocessor extracts data from the operation history database when a history inquiry request is received from a user; and
a display unit coupled to the microprocessor for displaying the extracted operation history data.

2. The home network system of claim 1, wherein the microprocessor identifies the at least one slave device by checking their identifications (IDs).

3. The home network system of claim 1, wherein the displayed operation history data includes a list of operations or events performed by the slave device during a predetermined period of time.

4. The home network system of claim 1, wherein the history inquiry request received from the user includes a user selection of a period of time, and the displayed operation history data includes a list of operations or events performed by each slave device during the selected period.

5. The home network system of claim 1, wherein the operation status data included in each response signal includes information indicating initiation or completion of an operation and a corresponding time of the initiation or completion.

6. The home network system of claim 1, wherein the master device is included in any one of a television (TV) receiver, a refrigerator having a display panel, a personal computer (PC), and a personal data assistant (PDA) device.

7. The home network system of claim 1, wherein the master device is operable to block messages from a slave device, using a message BLOCK function.

8. The home network system of claim 1 or 7, wherein the memory cumulatively stores the operation status data included in each response signal, regardless of whether a message BLOCK function of the master device is currently activated or not.

9. The home network system of claim 1, wherein the microprocessor and the at least one slave device are connected together through Power Line Communication (PLC) modems.

10. A television (TV) receiver connected to a plurality of slave devices in a home network system, the TV receiver comprising:
a microprocessor coupled to the plurality of slave devices for repeatedly sending status request signals to the slave devices and receiving one or more response signals from each slave device;
a memory coupled to the microprocessor for constructing an operation history database by cumulatively storing operation status data included in each response signal, wherein the microprocessor extracts data from the operation history database when a history inquiry request is received from a user; and
a display unit coupled to the microprocessor for displaying the extracted operation history data.

11. The television (TV) receiver of claim 9, wherein the microprocessor and the plurality of slave devices are connected together through Power Line Communication (PLC) modems.

12. The television (TV) receiver of claim 9, wherein the displayed operation history data includes a list of operations or events performed by the slave devices during a predetermined period of time.

13. The television (TV) receiver of claim 9, wherein the history inquiry request received from the user includes a user selection of at least one slave device, and the displayed operation history data includes a list of operations or events performed by each selected slave device during a predetermined period of time.

14. The television (TV) receiver of claim 9, wherein the history inquiry request received from the user includes a user selection of a period of time, and the displayed operation history data includes a list of operations or events performed by each slave device during the selected period.

15. The television (TV) receiver of claim 9, wherein the memory cumulatively stores the operation status data included in each response signal, regardless of whether a message BLOCK function of the television (TV) receiver is currently activated or not.

16. A method of providing operation history data in a home network system, the method comprising:
sending status request signals to a plurality of slave devices, respectively;
receiving one or more response signals sent by each slave device in response to the status request signals;
constructing an operation history database in a memory by cumulatively storing operation status data included in each response signal into the memory; and
extracting data from the operation history database when a history inquiry request is received from a user, wherein the extracted operation history data is displayed on a display unit.

17. The method of claim 16, further comprising identifying the slave devices by checking their identifications (IDs).

18. The method of claim 16, wherein the displayed operation history data includes a list of operations or events performed by the slave devices during a predetermined period.

19. The method of claim 16, wherein the operation status data included in each response signal includes data indicating a current operation status of a slave device.

20. The method of claim 16, wherein the operation status data included in each response signal includes information indicating initiation of one or more operations by a slave device and a time of the initiation.

21. The method of claim 16, wherein the operation status data included in each response signal includes information indicating completion of one or more operations by a slave device and a time of the completion.

22. The method of claim 16, wherein the operation status data included in each response signal includes information indicating that there is no operation in progress.

23. The method of claim 16, wherein the history inquiry request received from the user includes a user selection of at least one slave device, and the displayed data includes a list of operations or events performed by each selected slave device during a predetermined period.

24. The method of claim 16, wherein the history inquiry request received from the user includes a user selection of a period of time, and the displayed operation history data includes a list of operations or events performed by each slave device during the selected period.

25. The method of claim 16, wherein the user automatically makes the history inquiry request by turning the power of a master device on.

26. The method of claim 16, wherein the user manually makes the history inquiry request by activating a corresponding function key provided within the master device.
